# EUROPÄISCHE PATENTANMELDUNG

(11) **EP 4 663 504 A1**
(43) Veröffentlichungstag der Anmeldung: **17.12.2025**
(21) Anmeldenummer: 25171405.1
(22) Anmeldetag: 17.04.2025
(51) Int. Cl.: B61C 9/44, B61D 43/00, B61F 15/12, H02K 7/08, H02K 7/116

(54) **HILFSAGGREGAT FÜR EISENBAHN-RADSÄTZE**

(30) Priorität: 10.06.2024 DE 102024116152
(71) Anmelder: Eder, Erich, 94152 Neuhaus/Inn (DE); Winter, Tobias, 94081 Fürstenzell (DE)
(72) Erfinder: Eder, Erich, 94152 Neuhaus/Inn (DE); Winter, Tobias, 94081 Fürstenzell (DE); Moser, Franz, 4784 Schardenberg (AT); Springer, Mario, 94535 Eging am See (DE)
(74) Vertreter: Grättinger Möhring von Poschinger Patentanwälte Partnerschaft mbB

(57) **Zusammenfassung**

Hilfsaggregat für Eisenbahn-Radsätze, mit in Leichtbauweise ausgebildeten Hohlwellen, welches als elektrische Maschine (E-Maschine) mit daran angeschlossenem Untersetzungsgetriebe zum Anfahren und Befördern eines Eisenbahnwagens geeignet ausgebildet ist, wobei die E-Maschine und das Untersetzungsgetriebe auf einer gemeinsamen Rotorwelle gelagert sind, und welches eine Anschlusseinheit umfasst, die am Hilfsaggregat zum Lagerdeckel hin stirnseitig fest angeschlossen ist.

## Beschreibung

Die Erfindung betrifft ein Hilfsaggregat für Eisenbahn-Radsätze, mit in Leichtbauweise ausgebildeten Hohlwellen.

Das erfindungsgemäße Hilfsaggregat dient insbesondere an Eisenbahn-Güterwägen als deren Hilfsantrieb für Rangierbewegungen unabhängig von einer Lokomotive sowie als unabhängige Antriebseinheit zum Betreiben von elektrischen Maschinen, Pumpen oder dergleichen Zusatzgeräten in Zusammenhang mit dem Betrieb von Eisenbahnwaggons, sofern diese mit Eisenbahn-Radsätzen ausgestattet sind, welche Eisenbahnwellen in Form von Hohlwellen aufweisen. Derartige Hohlwellen in Leichtbauweise befinden sich derzeit im Entwicklungsstadium. Mit Innendurchmessern in der Größenordnung von etwa 250mm bieten derartige Hohlwellen als Bauteile der vorliegenden Erfindung hinreichend Raum für das erfindungsgemäße Hilfsaggregat.

Es sind elektrische Antriebseinheiten für Kraftfahrzeuge bekannt, die sich auch für Schienenfahrzeuge eignen (DE 10338659 A1; DE 19732637 A1; DE 10322022 A1), welche koaxial um eine Antriebswelle im Nabenbereich von Rädern angeordnet sind. Bei einem elektrischen Hohlwellen-Antriebsmotor für Schienenfahrzeuge (DE 10322022 A1) befinden sich die Bauteile des Antriebsmotors in einem offenen Gehäuse, welches mit dem Drehgestellt der Fahrzeugkonstruktion fest verbunden ist.

Dabei ist innerhalb einer Durchgangsöffnung des Gehäuses neben Rotor und Stator des Antriebsmotors noch eine elastische Kupplung zwischen Rotor und Abtrieb angeordnet, derart, dass sie Verlagerungen zwischen Abtrieb und Antriebsmotor zulässt.

Der vorliegenden Erfindung liegt die Aufgabe zugrunde, ein Hilfsaggregat, wie vorstehend beschrieben, zu schaffen, welches insbesondere kompakt ausgebildet ist, sodass es in der Lage ist, einerseits einen beladenen Güterwaggon im Rangierbetrieb zu bewegen und andererseits bei lokomotorischem Waggonantrieb, d.h**.** bei umgekehrtem Kraftfluss, ausgehend von der Hohlwelle, als beliebiges Hilfsaggregat zur Nutzung im Eisenbahnbetrieb eingesetzt zu werden, wie beispielsweise als E-Motor, Generator, Hydraulikpumpe oder dergleichen Arbeitsgeräte.

Zur Lösung vorstehender Aufgabe sowohl für die Selbstfahrfunktion als auch für den Betrieb spezieller Hilfsaggregate wird auf die im Patentanspruch 1 gekennzeichnete Merkmalskombination verwiesen.

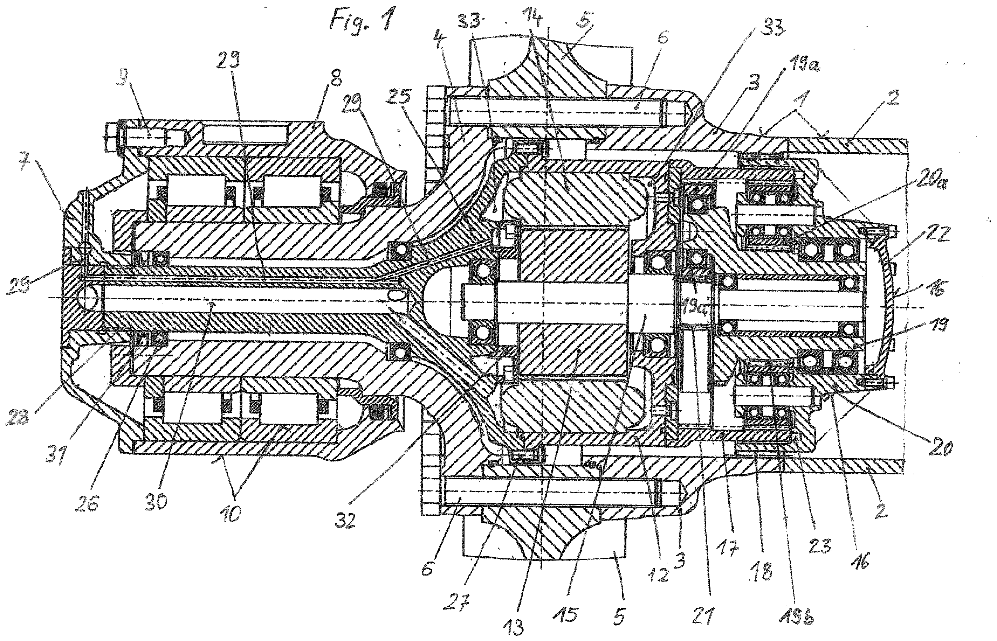

Die Erfindungsgemäße Merkmalskombination umfasst eine Mehrzahl von Hilfsaggregaten, nämlich in einer wesentlichen Ausführungsform eine Antriebseinheit zum Anfahren und Befördern eines Eisenbahnwagens, (vgl. Unteranspruch 2), wobei das Hilfsaggregat als elektrische Maschine (E-Maschine) mit daran angeschlossenem Untersetzungsgetriebe (Fig. 1) ausgebildet ist, welche eine gemeinsame Rotorwelle besitzen, und wobei das Untersetzungsgetriebe die Drehung der Rotorwelle auf die Hohlwelle entsprechend dem Untersetzungsverhältnis (vgl. Unteranspruch 3) überträgt.

In einer erfindungsgemäßen Ausgestaltung ist mit besonderer Berücksichtigung des im Inneren der Hohlwelle vorhandenen engen Bauraums das Untersetzungsgetriebe als Planetengetriebe ausgebildet, dessen Hohlrad mit dem Gehäuse der E-Maschine fest verbunden ist und dessen Getriebeteile mit einer Innenverzahnung der Hohlwelle in Triebverbindung stehen (vgl. Unteranspruch 4).

In einer besonders bevorzugten Bauweise des Untersetzungsgetriebes ist vorgesehen, dass es als zweistufiges Planetengetriebe ausgebildet ist (vgl. Unteranspruch 5).

Als geeignetes Untersetzungsgetriebe kommt auch ein Zykloidengetriebe in Betracht, wobei besonders hohe Untersetzungsstufen erreichbar sind.

Zahlreiche weitere Einsatzmöglichkeiten des erfindungsgemäßen Hilfsaggregats, soweit es bevorzugt in Zusammenhang mit dem Eisenbahnbetrieb eingesetzt wird, sind in weiteren Ausgestaltungen gemäß der vorliegenden Erfindung möglich.

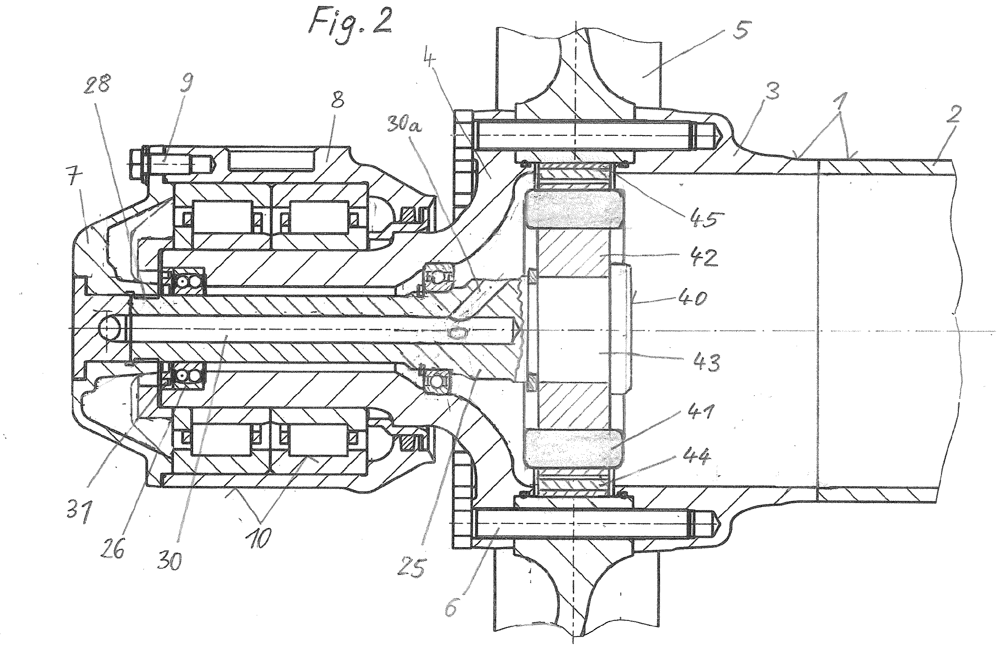

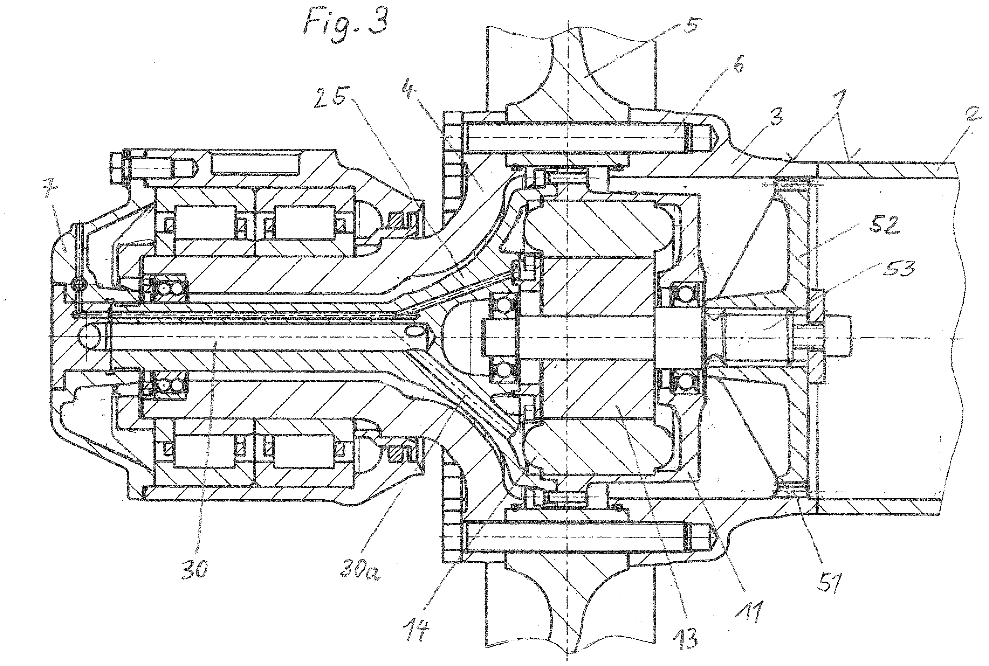

In diesem Zusammenhang wird ergänzend auf eine Ausführungsform als E-Maschine zum Laden einer Batterie (Fig. 2) oder als Generator zur Stromerzeugung (Fig. 3) verwiesen; diese Ausführungsformen sind jeweils ohne Getriebe gestaltet.

Im Falle einer E-Maschine als Batterieladeaggregat oder als Stromversorger für kleinere Leistungen kommt bevorzugt eine E-Maschine als Außenläufer zum Einsatz. Für den Generatorbetrieb eignet sich bevorzugt eine E-Maschine als Innenläufer, wobei derartige Varianten unter Verwirklichung des sogenannten industriellen Gleichteilekonzepts besonders vorteilhaft sind.

Im Rahmen des erfindungsgemäß vorgeschlagenen Konzepts eines Hilfsaggregats für Eisenbahnwagen steht im Vordergrund die Überlegung, eine E-Maschine mit oder ohne Getriebe geeignet für den Inneneinbau in Leichtbau-Hohlwellen von Eisenbahn-Radsätzen geeignet auszugestalten, wobei ein wesentliches Erfindungsmerkmal darin besteht, über eine zentrale, stirnseitig an die E-Maschine oder ein sonstiges Arbeitsgerät angeschlossene Anschlusseinheit vorzusehen, welche innerhalb eines Lagerflansches des Eisenbahnrads zentral angeordnet und dort feststehend gelagert ist. Das erfindungsgemäße Hilfsaggregat stellt insoweit mittels der Anschlusseinheit ein Gesamtkonzept dar, wobei die Anschlusseinheit nicht nur Lagerungsfunktionen übernimmt, sondern sich gleichzeitig als Trägerelement für nach außen führende Leitungsverbindungen dient. Dabei geht es um Leitungsverbindungen, beispielsweise in Form von Bohrungen zur Unterbringung von Stromleitungen bzw. Kabelanschlüssen oder um Kanäle zur Führung von Kühlmedien, beispielsweise zum Kühlen von E-Maschinen mittels Druckluft.

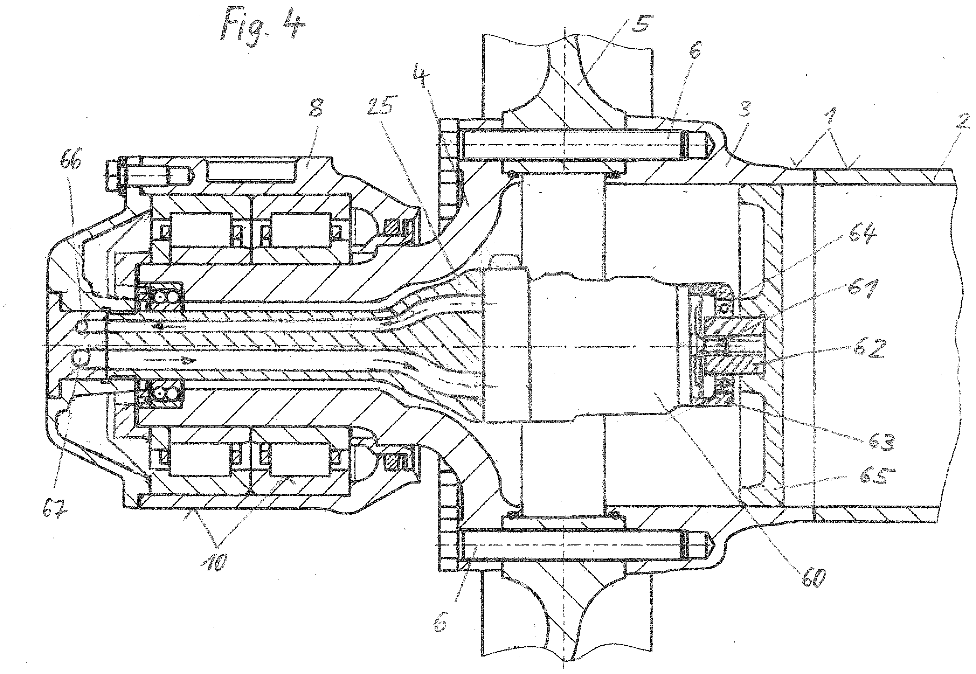

In einer erfindungsgemäßen Ausführungsform mit einem hydraulischen Arbeitsgerät in Form einer Zahnradpumpe (Fig. 4) ist innerhalb der Hohlwelle ein darin feststehend gelagertes Pumpengehäuse vorgesehen, wobei die Pumpenelemente durch die Rotation der Hohlwelle angetrieben werden.

Bedingt durch die hohe Leerlaufdrehzahl bei lokomotorischem Antrieb rotieren E-Maschine und/oder Getriebe permanent mit. Hierdurch entstehende Schleppmomente mit einhergehendem Energieverbrauch können durch den Einbau von Kupplungen vermieden werden vorteilhaft durch deren Trennschaltung zwischen E-Maschine und Untersetzungsgetriebe oder zwischen Hohlwelle und Hilfsaggregat.

Neben der Bereitstellung der Traktionsleistung kann die E-Maschine auch zum verschleißfreien Bremsen benutzt werden. Die freiwerdende Energie kann beispielsweise zum Laden einer Batterie genutzt und dann später zur Antriebsarbeit wieder verwendet werden. Sie kann auch ins Bahnnetz eingespeist werden, wenn die damit zusammenhängenden technischen Voraussetzungen gegeben sind. Alternativ kann die freiwerdende Energie auch über einen sogenannten Bremswiderstand in Wärme umgewandelt werden. Die E-Maschine wird dabei im 4-Quadranten-Betrieb genutzt, d.h. sie kann in beiden Drehrichtungen sowohl motorisch als auch generatorisch verwendet werden.

Im Folgenden werden Ausführungsbeispiele der Erfindung anhand der Zeichnung erläutert. Es zeigen:
Figur 1 ein elektromotorisches Hilfsaggregat mit E-Maschine und Planetengetriebe in einem Längsschnitt durch die Rotationsachse,
Figur 2 ein elektromotorisches Hilfsaggregat mit fliegend gelagertem Stator im Längsschnitt durch die Statorachse,
Figur 3 ein elektromotorisches Hilfsaggregat als Generator und
Figur 4 ein Hilfsaggregat als Hydraulikpumpe.

Figur 1 zeigt einen Längsschnitt durch eine Eisenbahnleichtbauachse für Eisenbahn-Radsätze, welche in Leichtbauweise ausgebildete Hohlwellen aufweisen. Dargestellt ist von einer derartigen Hohlwelle 1 deren radseitiges Ende 2 mit zylindrischem Querschnitt, welches mit einem Schweißflansch 3 verschweißt ist. Zwischen dem Schweißflansch 3 und einem Lagerflansch 4, der das Wellenende bildet, ist die zugeordnete Radscheibe 5, die ein Eisenbahnrad eines Eisenbahn-Radsatzes bildet, befestigt. Innerhalb des begrenzten Hohlraums der Hohlwelle 1 mit einem Innendurchmesser des Rohres 2 von etwa 200-250 mm und der anschließenden Flanschteile des Schweißflansches 3 und des Lagerflansches 4 sind alle Bauteile des jeweiligen Hilfsaggregats untergebracht, wobei der Einbauraum an seinem Außenende verschlossen ist durch einen Lagerdeckel 7, welcher mit dem stirnseitigen Ende eines Außengehäuses 8 des in Fig. 1 dargestellten Radsatzlagers 10 umlaufend mittels Schrauben 9 verschraubt ist. Innerhalb des Lagerdeckels 8 ist ein Wälzlager 10 angeordnet, in welchem das Ende des Lagerflansches 4 drehbar aufgenommen ist.

Das in Fig. 1 dargestellte Hilfsaggregat umfasst eine E-Maschine 11 als Motor mit Motorgehäuse 12, Rotor 13 und Stator 14, wobei der Rotor 13 drehfest auf einer Rotorwelle 15 sitzt. Der E-Motor 11 dient als Antrieb für ein Untersetzungsgetriebe zum Anfahren und Befördern eines Eisenbahnwagens, dessen Radsatz mit der Hohlwelle 1 treibend verbunden ist.

Das Untersetzungsgetriebe ist als Planetengetriebe 16 ausgebildet, dessen Hohlrad 17 mit dem Motorgehäuse 12 fest verbunden ist und dessen Getriebeteile mit einer Innenverzahnung 18 der Hohlwelle 1 in Triebverbindung stehen.

Figur 1 zeigt ein zweistufiges Planetengetriebe, dessen Getriebeteile eine Dimensionierung des Untersetzungsgetriebes mit geringerer radialer Abmessung, verglichen mit einem einstufigen Planetengetriebe ermöglichen.

Das dargestellte zweistufige Planetengetriebe umfasst neben dem Hohlrad 17 einen Planetenträger 19 der Planetenstufe 1 mit Planetenrädern 19a und einen Planetenträger 20, der Planetenstufe 2 mit Planetenrädern 20a. Die Planetenräder sind jeweils über Wälz- bzw. Kugellagern auf dem jeweiligen Planetenträger 19 bzw. 20 gelagert. Die Planetenräder 19a bzw. 20a kämmen jeweils mit der Innenverzahnung des Hohlrads 17. Das Hohlrad 17 ist topfförmig ausgebildet und mit dem Motorgehäuse 12 der E-Maschine 11 zentrisch verschraubt.

In der Stufe 1 des Planetengetriebes 16 werden die Planetenräder 19a über die Verzahnung 21 des Sonnenrads der Planetenstufe 1 angetrieben und kämmen mit der Innenverzahnung des Hohlrads 17.

In der Stufe 2 des Planetengetriebes 16 kämmen die Planetenräder 20a einerseits mit der Innenverzahnung des Hohlrads 17 und greifen andererseits auf eine Außenverzahnung 19b des Planetenträgers 19 der Stufe 1 ein. Diese wiederum treibt den Planetenträger 20 der Stufe 2, dessen Außenverzahnung 18 mit einer Innenverzahnung des Schweißflansches 3 der Hohlwelle 1 kämmt und somit die gewünschte Untersetzung von 1:20 entsprechend einer 20-fachen Erhöhung des Drehmoments ermöglicht.

Das Untersetzungsgetriebe ist dauerhaft ölgeschmiert und nach Außen mit einem Verschlussdeckel 22 abgedichtet. Zusätzlich ist eine axiale Öldichtung 23 zwischen dem Planetenträger 20 der Planetenstufe 2 und dem Hohlrad 17 vorgesehen.

Für den Einbau eines beliebigen Hilfsaggregats in den beschränkten Hohlraum einer Hohlwelle 1 von Eisenbahn-Radsätzen besteht eine wesentliche technische Voraussetzung darin, das Hilfsaggregat mittels einer daran angeschlossenen Anschlusseinheit 25 zur Unterstützung der Lagerung des Hilfsaggregat und ihrer Versorgung mit nach außen führenden Leitungsverbindungen zu versehen. Diese umfassen beispielsweise Kabelkanäle für die elektrische Versorgung, für die elektronische Steuerung, für Kühlmedien zum Betreiben von E-Maschinen für Hydraulikleitungen oder dergleichen.

Gemäß Fig. 1 ist die Anschlusseinheit 25 stirnseitig innerhalb des Lagerflansches 4 feststehend angeordnet. An ihrem äußeren Ende ist sie mittels eines Wälzlagers 26 gegenüber dem Lagerflansch 4 abgestützt und mit ihrem inneren Ende mit dem Motorgehäuse 12 fest mittels umlaufend angeordneten Schrauben 27 verschraubt. Mit ihrem stirnseitigen Ende ist die Anschlusseinheit 25 mittels einer Kerbverzahnung 28, die als Momentenstütze dient, an den Lagerdeckel 7 angeschlossen.

Ein Druckluftkanal 29 zur Kühlung der E-Maschine 11 und ein zentraler Versorgungskanal 30 zur Aufnahme von Kabelverbindungen, welcher der Energieversorgung und der Maschinensteuerung dienen und entsprechende Verzweigungen an die jeweiligen Zugänge aufweisen, sind über entsprechende Zuführungen durch den Lagerdeckel 7 mittels nicht dargestellten Versorgungsanschlüssen nach außen verbunden. Das Wälzlager 26 ist mittels eines druckbeständigen Wellendichtrings 31 gegenüber dem Lagerdeckel 7 nach außen abgedichtet. Dies ist aus Sicherheitsgründen erforderlich, da innerhalb der Hohlwelle 1 eine den Betriebsbedingungen entsprechende Drucküberwachung zur Erhaltung des in der Hohlwelle 1 herrschenden Überdrucks zu gewährleisten ist.

Die über die Druckluftleitung 29 durch den Lagerdeckel 7 und die Anschlusseinheit 25 verlaufenden Bohrungen enden auf Seiten der E-Maschine in einem umlaufenden Verteilergehäuse 32, dessen Hohlraum über nicht gezeichnete axiale Düsen die Druckluft durch den Spalt zwischen Stator 14 und Rotor 13 der E-Maschine ausbläst. Die erwärmte Kühlluft gelang schließlich über den Hohlraum 33 und weitere Kanäle im Gehäuse der E-Maschine 11 wieder zurück und tritt über die zentrale Bohrung 30 wieder nach außen, wo sie einer externen Kompressoreinheit wieder zugeführt wird. Auf diese Weise wird die zentrale Bohrung 30 einerseits als Kabelkanal, andererseits zur Rückleitung der Abluft genutzt.

Die gewählte konstruktive Lösung der erfindungsgemäßen Aufgabe durch Positionierung eines Hilfsaggregats im Verbindungsbereich einer Eisenbahn-Hohlwelle 1 innerhalb der zwischen Schweißflansch 3 und Lagerflansch 4 verschraubten Radscheibe 5 stellt eine neuartige multifunktionale Ausgestaltung des die Radscheibe 5 tragenden Hohlwellenendabschnitts von Eisenbahn-Radsätzen mit Leichtbauwellen dar.

Im Folgenden werden Varianten des zu Fig. 1 beschriebenen Hilfsaggregats in einem kurzen aber nicht abschließenden Überblick beschrieben.

Fig. 2 zeigt ein elektromotorisches Hilfsaggregat mit fliegend gelagertem Stator 40, umfassend eine Wicklung 41 mit Blechpaket 42, welcher auf einer zentralen Statorachse 43 feststehend gelagert ist. Der Rotor dieses im Längsschnitt dargestellten Hilfsaggregats besteht aus Permanentmagneten 44, welche zentrisch innerhalb eines Trägerrings 45 befestigt sind, der zwischen Schweißflansch 3 und Lagerflansch 4 mit der Lagerbohrung der Radscheibe 5 drehfest verbunden ist. Im Übrigen sind in der Fig. 2 mit dem Hilfsaggregat gemäß Fig. 1 gleichartige Bauteile mit denselben Bezugsziffern bezeichnet, was auch auf die nachfolgenden Figuren 3 und 4 zutrifft. Insoweit erübrigen sich Wiederholungen zu bereits in Zusammenhang mit Fig. 1 erfolgten Beschreibungsteilen.

Abweichend von dem zu Fig. 2 beschriebenen Außenläufer der E-Maschine 40, die eine Synchronmaschine mit magnetischer Induktion darstellt und im praktischen Einsatz als einfacher Batterielader oder kleiner Stromversorger dient, kommen für den Einsatz größerer E-Maschinen als Generator bevorzugt in der Ausgestaltung als Innenläufer in Frage. Unter besonderer Beachtung des Gleichteilekonzepts in der industriellen Fertigung wird im Folgenden gemäß Fig. 3 eine E-Maschine beschrieben, die als Innenläufer gestaltet ist, insoweit also eine zu Fig. 1 weitgehend gleichartig gestaltete E-Maschine als Innenläufer aufweist. Der Generator gemäß Fig. 3 wird über ein Zahnnabenprofil 51 auf der Innenseite des Schweißflansches 3 der Leichtbauwelle 1 angetrieben, wobei ein mit dem Zahnnabenprofil 51 kämmendes Antriebszahnrad 52 drehfest auf dem inneren Ende der Generatorwelle 53 gelagert ist.

Fig. 4 zeigt ein Hilfsaggregat, umfassend ein Arbeitsgerät 60, eingebaut in eine zu den Figuren 1 bis 3 baugleiche Leichtbauwelle 1. Das Arbeitsgerät 60 ist eine Hydraulikpumpe, beispielsweise in Form einer Zahnradpumpe oder einer Axialkolbenpumpe, deren Gehäuse innerhalb der Hohlwelle 1 feststehend gelagert ist und deren Achsstummel 61 mit einer Außenverzahnung in die Innenverzahnung einer Mitnehmerbuchse 62 eingreift. Ein mit dem Pumpengehäuse drehfest verbundener Lagerring 63 ist über ein Rollenlager 64 auf der Mitnehmerbuchse 62 gelagert. Die Mitnehmerbuchse 62 sitzt drehfest im Zentrum einer Antriebsscheide 65, die wiederum mit ihrem Außenumfang mit dem Innenumfang des Schweißflansches 3 drehfest verbunden ist.

Das stirnseitig mit der Hydraulikpumpe verbundene Anschlussteil 25 besitzt zwei Bohrungen für den Ölkreislauf mit einem Zuführkanal 66 und einem Abführkanal 67, wobei beide Kanäle über den Lagerdeckel 7 nach Außen verbunden sind. Auf diese Weise wird der Ölkreislauf für den Betrieb beliebiger Aggregate des Eisenbahnwaggons während dessen Antrieb durch die Lokomotive gewährleistet.

## Patentansprüche

1. Hilfsaggregat für Eisenbahn-Radsätze, mit in Leichtbauweise ausgebildeten Hohlwellen, welches durch folgende Merkmale gekennzeichnet ist:
a) es ist eingebaut in den Hohlraum einer Hohlwelle (1);
b) es erstreckt sich im Inneren der Hohlwelle (1) bis innerhalb eines Lagerflansches (4), eines mit der Hohlwelle drehfest verbundenen Eisenbahnrads (5) bis zum zugeordneten Lagerdeckel (7) eines Radsatzlagers (10);
c) es umfasst eine Anschlusseinheit (25), welche daran zum Lagerdeckel (7) hin stirnseitig fest angeschlossen ist;
d) die Anschlusseinheit (25) ist wenigstens an ihrem dem Lagerdeckel (7) benachbarten Ende innerhalb des Lagerflansches (4) feststehend gelagert;
e) die Anschlusseinheit (25) ist mit durch den Lagerdeckel (7) nach außen führenden Leitungsverbindungen versehen.

2. Hilfsaggregat nach Anspruch 1, **dadurch gekennzeichnet, dass** es als elektrische Maschine (E-Maschine 11) mit daran angeschlossenem Untersetzungsgetriebe zum Anfahren und Befördern eines Eisenbahnwagens geeignet ausgebildet ist und dass die E-Maschine (11) und das Untersetzungsgetriebe auf einer gemeinsamen Rotorwelle (15) gelagert sind.

3. Hilfsaggregat nach Anspruch 2, **dadurch gekennzeichnet, dass** das Untersetzungsgetriebe mit dem Gehäuse (12) der E-Maschine (11) derart verbunden ist, dass es die Drehung der Rotorwelle (15) auf die Hohlwelle (1) entsprechend dem Untersetzungsverhältnis überträgt.

4. Hilfsaggregat nach Anspruch 3, **dadurch gekennzeichnet, dass** das Untersetzungsgetriebe als Planetengetriebe (16) ausgebildet ist, dessen Hohlrad (17) mit dem Gehäuse (12) der E-Maschine (11) fest verbunden ist und dessen Getriebeteile mit einer Innenverzahnung (18) der Hohlwelle (1) in Triebverbindung stehen.

5. Hilfsaggregat nach Anspruch 4, **dadurch gekennzeichnet, dass** die Getriebeteile durch ein 2-stufiges Planetengetriebe gebildet sind.

6. Hilfsaggregat nach Anspruch 1, **dadurch gekennzeichnet, dass** bei lokomotorischem Antrieb der Hohlwelle (1) eine Kupplung zwischen E-Maschine und Untersetzungsgetriebe als Trennung schaltbar ist.

7. Hilfsaggregat nach Anspruch 1, **dadurch gekennzeichnet, dass** bei lokomotorischem Antrieb der Hohlwelle (1) eine Kupplung zwischen Hohlwelle und Hilfsaggregat als Trennung schalt bar ist.

8. Hilfsaggregat nach Anspruch 1, **dadurch gekennzeichnet, dass** es ein innerhalb der Hohlwelle (1) feststehend gelagertes Arbeitsgerät (60) umfasst, welches mit der Hohlwelle (1) rotierend verbunden ist.
